# EUROPÄISCHE PATENTSCHRIFT

(11) **EP 1 644 579 B1**
(45) Veröffentlichungstag und Bekanntmachung des Hinweises auf die Patenterteilung: **04.06.2008**
(21) Anmeldenummer: 04740462.9
(22) Anmeldetag: 30.06.2004
(51) Int. Cl.: D21H 17/69, D21H 23/76, C01B 33/146

(54) **PAPIERHERSTELLUNG MIT MODIFIZIERTEN KIESELSOLEN ALS MIKROPARTIKEL**
PAPER PRODUCTION WITH MODIFIED SILICA GELS AS MICROPARTICLES
FABRICATION DU PAPIER AVEC UTILISATION DE SOLS DE SILICE MODIFIES COMME MICROPARTICULES

(30) Priorität: 04.07.2003 DE 10330395; 24.04.2004 DE 102004020112
(43) Veröffentlichungstag der Anmeldung: 12.04.2006
(73) Patentinhaber: Kemira Oyj, 00180 Helsinki (FI)
(72) Erfinder: MEISEL, Karlheinrich, 51519 Odenthal (DE); THIELE, Bernd, 51519 Odenthal (DE); RENNER, Gerd-Friedrich, 51519 Kürten (DE); KIJLSTRA, Johan, 51519 Odenthal (DE); NENNEMANN, Arno, 51469 Bergisch Gladbach (DE); HÜBBE, Thomas, 51069 Köln (DE); PUPPE, Lothar, 51399 Burscheid (DE)
(74) Vertreter: Bublak, Wolfgang
(86) Internationale Anmeldenummer: PCT/EP2004/007081
(87) Internationale Veröffentlichungsnummer: WO 2005/003455

(56) Entgegenhaltungen:
- EP-A- 1 142 640
- WO-A-00/69976
- WO-A-86/00100
- DE-A- 2 426 306
- DE-A- 10 050 343
- US-A- 5 603 805
- US-A- 5 760 126
- US-A- 5 888 290

## Beschreibung

Die Erfindung betrifft die Verwendung modifizierter Kieselsole für die Papierherstellung, modifizierte Kieselsole an sich sowie Verfahren zu ihrer Herstellung.

Bei der Herstellung von Papier werden zur Verbesserung von Retention, Entwässerungsverhalten und Formation (hierunter wird die "Gleichmäßigkeit" bzw. "Wolkigkeit" des Papiers verstanden) Mikropartikelsysteme eingesetzt. Diese können sowohl organischer als auch anorganischer Natur sein. Sie werden bevorzugt in Kombination mit kationischen Polymeren eingesetzt.

Als anorganische Mikropartikel werden bevorzugt Bentonite sowie Kieselsole eingesetzt (siehe EP-A-0 635 602, WO 86/00100 und US 5,603,805). Im Gegensatz. zu den organischen Mikropartikelsystemen, die ihre volle Wirkung auch in saurem Medium entfalten, haben anorganische Mikropartikelsysteme auf Basis von Bentonit oder Kieselsol den Nachteil, dass sie ihre optimale Wirkung nur in. neutralem oder alkalischem Medium erreichen. Kieselsole haben darüber hinaus den Nachteil, dass sie bei längerem Lagern zum Vergelen neigen. Dies macht wiederum weitere Zusätze wie Dispergiermittel oder Oberflächendotierungen mit Aluminiumionen erforderlich (EP-A-0 185 068, US-A-5 603 805, K.K. Iler, The Chemistry of Silica, Wiley & Sons, New York, 1979, Seiten 407-410). Als weiteren Nachteil besitzen die bekannten Kieselsole für den Zweck des Mikropartikelsystems eine verbesserungsbedürftige Kosten-Wirkungsrelation.

Es ist die Aufgabe der vorliegenden Erfindung, Kieselsole als Mikropartikel für die Papierherstellung bereitzustellen, die die beschriebenen Nachteile des Standes der Technik nicht aufweisen.

Überraschenderweise wurde nun gefunden, dass Sulfonsäuregruppen- und/oder Marcaptogruppen-haltige Kieselsole diese Aufgabe lösen. Die Erfindung betrifft daher die Verwendung von Sulfonsäuregruppen- und/oder Mercaptogruppen-haltigen Kieselsolen als Mikropartikel bei der Papierherstellung, insbesondere bei der Papierretention.

Im Rahmen dieser Anmeldung werden unter "Säuregruppe" auch deren Salze, insbesondere Alkali-, wie Natrium- und Kalium, Erdalkali-, wie Magnesium- und Calcium-oder Ammoniumsalze verstanden.

Bevorzugt sind solche Kieselsole, die eine an ein Siliciumatom gebundene Gruppe der Formel (I) und/oder II aufweisen,

-B-(SO₃M)ₚ- (I),

-B-(SH)ₚ- (II),

worin
- B: ein (p+1)-valentes Brückenglied bedeutet,
- p: eine Zahl von 1 bis 3 ist und
- M: für Wasserstoff, Alkali insbesondere Na, Li, K, Erdalkali insbesondere Mg, Ca oder Ammonium steht.

Besonders bevorzugt ist B bivalent, d.h. p steht für 1. Vorzugsweise steht B für eine gegebenenfalls durch ein oder mehrere Sauerstoffatome unterbrochene lineare oder verzweigte Alkylengruppe mit 1 bis 15 C-Atomen, eine Cycloalkylengruppe mit 5 bis 8 C-Atomen oder eine Einheit der Formeln

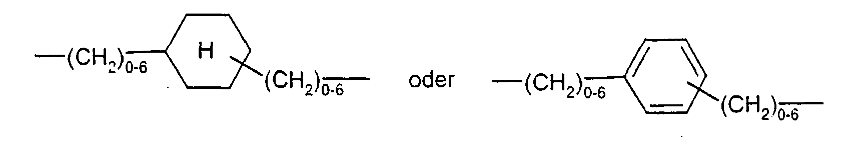

Ganz besonders bevorzugt steht B für -(CH₂)ₙ- mit n = 1 bis 6, insbesondere 3.

Bevorzugt werden Kieselsole mit Sulfonsäuregruppen, insbesondere solche der Formel (I), besonders bevorzugt solche der Formel (Ia)

-(CH₂)₃-SO₃M (Ia)

verwendet, wobei M die oben angegebene Bedeutung hat.

Bevorzugt beträgt der Schwefelgehalt bezogen auf SiO₂ des Kieselsols 0,1 bis 30 Mol-%, vorzugsweise 0,1 bis 8 Mol-%, insbesondere 1 bis 5 Mol-%. Der Schwefelgehalt kann beispielsweise durch Elementaranalyse bestimmt werden.

Bevorzugt weisen die erfindungsgemäß verwendeten Kieselsole nach der TEM-Methode (Transmissions-Elektronenmikroskopie) eine mittlere Teilchengröße von kleiner 400 nm, vorzugsweise von 2 - 200 nm, insbesondere von 2 - 45 nm, besonders bevorzugt von 2 - 20 nm auf.

Bevorzugt weisen die erfindungsgemäßen Kieselsole eine spezifische Oberfläche von 300 bis 1200 m²/g auf, vorzugsweise 400 bis 1200 m²/g, insbesondere 450 bis 1200 m²/g, gemessen durch Sears-Titration mit Natriumhydroxid.

Die spezifische Oberfläche wird durch Titration des Kieselsols mit NaOH nach dem Searsverfahren bestimmt (G.W. Sears, Analytical Chem. 28, 12, S. 1981ff, 1956). Die Bestimmung der spezifischen Oberfläche dieses Eichsols erfolgt über die BET-Methode (S. Brunauer, P.H. Emmet und E. Teller, J. Amer. Soc. 60, 309-319, 1938).

Ebenfalls bevorzugt sind die erfindungsgemäßen Kieselsole, die einen S-Wert von 2 bis 80, vorzugsweise 2,5 bis 70, insbesondere von 20 bis 70 besitzen.

Die Bestimmung der S-Werte erfolgt nach Iler, R.K; Dalton, R.L. Journal of Physical Chemistry 1956, 60 955.

Die erfindungsgemäß verwendeten Kieselsole liegen bevorzugt als wässrige Dispersion vor, vorzugsweise mit einem Gehalt von 5 bis 20 Gew.-% an Kieselsol, bezogen auf die Dispersion, vorzugsweise 7,5 bis 15 Gew.-%, insbesondere 10 bis 15 Gew.-%. Diese Dispersionen, die ebenfalls Gegenstand der vorliegenden Erfindung sind, können weiterhin Salze der Alkali- oder Erdalkalielemente bzw. Verbindungen des Aluminiums oder Bors enthalten. Weiterhin können anionische oder nichtionische Dispergiermittel enthalten sein.

Die Dispersionen enthalten jedoch vorzugsweise einen Al-Gehalt von kleiner 0,1 Gew.-%. Sollte der Salzgehalt zu hoch sein, kann dieser beispielsweise mittels Membran-technischer Verfahren verringert werden. Ebenfalls können die Kieselgelgehalte in der Dispersion mittels Membranen eingestellt werden, beispielsweise durch Aufkonzentration weniger konzentrierter Dispersionen.

Bevorzugt wird das erfindungsgemäße Kieselsol in Kombination mit kationischen Polymeren, insbesondere solchen aus der Gruppe der Polyethylenimine, Polyamine, Polyamidamide, Polyacrylamide, Polyvinylamin, Stärke oder Guarkernmehl oder andere Polysaccharide, die ggf. weiter modifiziert sein können und die einzeln oder in beliebiger Mischung miteinander eingesetzt werden können, eingesetzt.

Als bevorzugte Polyethylenimine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Als bevorzugte Polyamidamine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Bevorzugte Polyacrylamide können sowohl linear als auch verzweigt sein. Ihr Molekulargewicht kann von 2 Mio bis 30 Mio Dalton liegen, bevorzugt von 2,5 Mio bis 15 Mio Dalton.

Als bevorzugte Stärke sind kationische Stärkederivate auf der Basis von Kartoffeln, Tapioca, Mais, Weizen oder Reis zu nennen. Sie haben bevorzugt einen Substitutionsgrad von 0,005 bis 0,15, besonders bevorzugt einen Substitutionsgrad von 0,02 bis 0,08. Die Stärken können ggf. auch teilweise abgebaut sein.

Die Erfindung betrifft weiterhin Sulfonsäuregruppen- und/oder Mercaptogruppen-haltige Kieselsole mit einer mittleren Teilchengröße, gemessen nach TEM, von 2 - 45 nm, vorzugsweise von 2-20 nm. Ansonsten gelten die oben angegebenen Vorzugsbereiche.

Die Erfindung betrifft weiterhin Sulfonsäuregruppen- und/oder Mercaptogruppen-haltige Kieselsole mit einem Schwefelgehalt, bezogen auf SiO₂ des Kieselsols von 0,1 bis 30 Mol%, vorzugswseise 0,1 bis 8 Mol-%, insbesondere 1 bis 5 Mol-%.

Ansonsten gelten die oben angegebenen Vorzugsbereiche. Die erfindungsgemäßen Kieselsole mit einem derartigen Schwefelgehalt sind insbesondere dann bevorzugt, wenn sie einen Rest der Formel -(CH₂)₃-SO₃M besitzen, worin M die obige Bedeutung hat und insbesondere für H oder Na steht.

Bevorzugt sind auch solche Ausführungsformen erfindungsgemäßer Kieselsole, die Mercaptogruppen besitzen, insbesondere solche der Formel (II), die die Mercaptogruppen an einem Si-Atom gebunden besitzen und die einen Sulfonsäuregruppengehalt von kleiner 1 mol-%, bezogen auf SiO₂ des Kieselsols besitzen.

Die Erfindung betrifft weiterhin ein Verfahren zur Herstellung der erfindungsgemäßen Kieselsole, das dadurch gekennzeichnet ist, dass man ein SH- und SO₃M-gruppenfreies Kieselsol, worin M die obige Bedeutung hat,
zur optionalen Einführung der SH-Gruppen
a) mit Mercaptoverbindungen umsetzt und
   zur optionalen Einführung der Sulfonsäuregruppen
b) mit einer SO₃M-gruppenhaltigen Verbindung umsetzt oder
b1) mit einer eine funktionelle Gruppe enthaltenden Verbindung umsetzt und die funktionelle Gruppe selbst in eine SO₃M-Gruppe überführt, insbesondere die nach a) erhaltene Mercaptoverbindung oxidiert, oder
b2) mit einer eine funktionelle Gruppe enthaltenden Verbindung umsetzt und das so derivatisierte Kieselsol weiter mit einer SO₃M-gruppenhaltigen Verbindung umsetzt,
wobei die Umsetzung in einem wässrigen Medium mit einem Wassergehalt von wenigstens 75 Gew.-% in wenigstens einer der Stufen a), b), b1) oder b2), bezogen auf das jeweilige Reaktionsgemisch, durchgeführt wurde.

Besonders bevorzugt sind die Varianten a), b) und b1).

Als SO₃M-gruppenhaltige Verbindung ist bevorzugt die Verbindung der Formel III zu nennen

(CH₃)_{q}Si(OR)ₘ(OH)ₚ-(CH₂)ₙ-SO₃M (III),

worin
- m und p: jeweils eine Zahl von 0 bis 3 bedeuten,
- q: = 0 der 1 ist und
und die Summe von q und m und p = 3 ist,
- n: = 1 bis 15, vorzugsweise 1 bis 6, insbesondere 3,
- M: die obige Bedeutung hat und
- R: für C₁-C₃-Alkyl, insbesondere für Methyl oder Ethyl steht.

Besonders bevorzugt sind Verbindungen der Formel (III), die der Formel (IIIa) entsprechen

(CH₃)_{q} Si(OH)ₚ-(CH₂)₃-SO₃M (IIIa),

worin
- M, p und q: die oben genannte Bedeutung haben, insbesondere steht p für 3 und q für 0.

Als eine wenigstens eine funktionelle Gruppe enthaltende Verbindung wird vorzugsweise eine Mercapto (SH)-Verbindung eingesetzt, die nach der Umsetzung zu einer SO₃M-Verbindung oxidiert wird.

Als bevorzugte Mercapto-Verbindungen sind solche der Formel (IV) zu nennen

(CH₃)_{q}Si(OR)ₘ(OH)ₚ-(CH₂)ₙ-SH (IV),

worin
- m, p und q: die oben angegebenen Bedeutungen haben,
- n: 1 bis 15, insbesondere 1 bis 6, vorzugsweise 3 bedeutet und
- R: die oben genannte Bedeutung hat, vorzugsweise für Methyl oder Ethyl steht.

Eine bevorzugte Verbindung der Formel IV ist die der Formel (IVa)

(CH₃)_{q} Si(OCH₃)ₘ(CH₂)₃-SH (IVa),

worin die Summe aus q und m = 3 ist,
sowie eine Verbindung der Formel (IVb)

(CH₃)_{q}Si(OH)ₚ(CH₂)₃-SH (IVb),

worin die Summe aus q und p = 3 ist und
worin m, p und q jeweils die oben genannte Bedeutung haben.

Die Umsetzung von Kieselsol mit funktionelle Gruppen tragenden Verbindungen, insbesondere mit Mercapto-Verbindungen, vorzugsweise solchen der Formeln IV und IVa, ist vorzugsweise dadurch gekennzeichnet, dass man die beiden Komponenten bei einer Temperatur von 0°C bis 150°C, vorzugsweise 0°C bis 100°C reagieren lässt. Dabei können mögliche Kondensationsprodukte wie Wasser und Alkohole vorzugsweise kontinuierlich der Reaktionsmischung entnommen werden, beispielsweise durch Destillation. Gegebenenfalls kann auch in einem Lösungsmittel gearbeitet werden.

Insbesondere die Mercapto-Gruppen des so erhaltenen Kieselsols können anschließend mit einem Oxidationsmittel, vorzugsweise H₂O₂, in bekannter Weise zu Sulfonsäuregruppen oxidiert werden.

Die Oxidation kann alternativ auch mit Ammoniumperoxodisulfat, Natriumperoxodisulfat, Kaliumperoxodisulfat, Eisennitrat, tert-Butylhydroperoxid, Ozon (Carosche Säure), Kaliumiodat, Kaliumperiodat, Periodsäure durchgeführt werden.

Weiterhin sind Verbindungen zu nennen, die funktionelle Gruppen tragen, die als Anker dienen und mit Verbindungen umgesetzt werden, die ihrerseits eine oder mehrere SO₃H-Gruppen tragen. Solche Verbindungen haben beispielsweise die allgemeine Formel (V)

(CH₃)_{q} Si(OH)ₘ(CH₂)₃-F, (V)

wobei
F eine funktionelle Gruppe ist, die weiter umgesetzt werden kann, wie z.B. eine SH-Gruppe, eine primäre oder sekundäre Aminogruppe und q und m die oben genannte Bedeutung haben.

Bevorzugte funktionelle Gruppen-tragende Verbindungen sind:

Si(OCH₃)₃-(CH₂)₃-SH (VI),

CH₃Si(OCH₃)₂(CH₂)₃-SH (VII),

Si(OH)₃-(CH₂)₃-SH (VIII),

CH₃Si(OH)₂(CH₂)₃-SH (IX),

Si(OC₂H₅)₃-(CH₂)₃-SH (X),

CH₃Si(OC₂H₅)₂-(CH₂)₃-SH (XI),

Si(OCH₃)₃-(CH₂)₃-NH₂ (XII),

CH₃Si(OCH₃)₂ (CH₂)₃-NH₂ (XIII),

Si(OH)₃-(CH₂)₃- NH₂ (XIV),

CH₃Si(OH)₂(CH₂)₃-NH₂ (XV),

Si(OC₂H₅)₃-(CH₂)₃-NH₂ (XVI),

CH₃Si(OC₂H₅)₂-(CH₂)₃-NH₂ (XVII),

die ihrerseits mit bifunktionellen Verbindungen der allgemeinen Formel

ClO₂S-B₁-(SO₂Cl)ₙ,

worin n = 1 oder 2 bedeutet
und B₁ ein aromatisches Brückenglied mit 6 oder 10 Kohlenstoffatomen bedeutet,
umgesetzt werden können.

Besonders bevorzugt sind dabei Benzoldisulfonsäurechloride, Toluoldisulfonsäurechloride oder Naphthalindisulfonsäurechloride bzw. Naphthalintrisulfonsäurechloride, die ihrerseits wieder substituiert sein können, so dass beispielsweise ein Mikropartikelsystem der allgemeinen Formel

SiO₂)-(CH₂)₃NH-SO₂-C₁₀H₆-SO₃M (XVIII)

resultiert.

Ebenfalls bevorzugt ist es, Komponenten der allgemeinen Formeln VI bis XVII mit bi- oder trifunktionellen Reagenzien umzusetzen, die ihrerseits keine weitere saure Gruppe tragen, aber zur Brückenbildung befähigt sind. Solche Verbindungen sind beispielsweise Cyanurchlorid oder Diisocyanate, insbesondere Hexamethylendiisocyanat, p-Phenylendiisocyanat oder Toluylendiisocyanat. Sie können ihrerseits wieder mit Verbindungen umgesetzt werden, die durch Sulfonsäuregruppen substituiert sind. Solche Verbindungen können sein:

Taurin oder aus der Farbstoffchemie bekannte durch Aminogruppen substituierte aromatische Sulfonsäuren, beispielsweise H-Säure (1-Amino-8-hydroxinaphthalin-3,6-disulfonsäure), I-Säure (2-Amino-5-hydroxi-naphthalin-7-sulfonsäure) oder γ-Säure (2-Amino-8-hydroxi-6-sulfonsäure).

Bevorzugt werden die Verbindungen III bis XVII in einer Menge von 0,1 bis 30 Mol-%, insbesondere 0,5 bis 5 Mol-% bezogen auf Si des Kieselsols eingesetzt.

Ebenfalls betrifft die Erfindung die durch Umsetzung von Kieselsol und einer Verbindung der Formel III oder IV und gegebenenfalls anschließender Oxidation erhältlichen Produkte.

Sulfongruppen-haltige Kieselsole sind bereits in anderer Form (z.B. andere Teilchengröße bzw. anderer Schwefelgehalt) für Katalysatorzwecke aus EP-A-1 142 640, EP-A-63 471, DE-A-2 426 306 sowie R-D. Badley, T. Ford. J. Org. Chem. 1989, 54, 5437-5443 bekannt.

Die Erfindung betrifft weiterhin ein Verfahren zur Herstellung von Papier, das dadurch gekennzeichnet ist, dass man einer wässrigen Cellulosesuspension das erfindungsgemäße Kieselsol und ein kationisches Polymer in beliebiger Reihenfolge zugibt, anschließend die Blattbildung, Entwässerung und Trocknung des Blattes vornimmt. Solche Verfahren sind beispielsweise in US-A-5 643 414 beschrieben.

Die erfindungsgemäßen Kieselsolen zeichnen sich durch eine deutlich verbesserte Lagerstabilität aus. Gleichzeitig zeigen sie eine deutlich verbesserte Wirksamkeit bei Entwässerungsgeschwindigkeit und Retention, insbesondere in Kombination mit kationischen Polymeren geringer Ladungsdichte.

### Beispiele

### Beispiel 1:

Eine konzentrierte wässrige Lösung von Wasserglas der Bruttozusammensetzung (NaₐO˙3, 3SiO₂) wird mit Wasser auf einen SiO₂-Gehalt von 6 % verdünnt. Die wässrige Lösung wird mit einem sauren Ionenaustauscher auf pH 2,3 bis 2,5 gestellt. Die so erhaltene Lösung wird im Folgenden als "Frischsol" bezeichnet.

### Beispiel 2:

Die in Beispiel 1 hergestellte Frischsollösung wird in 0,5 Std. in eine verdünnte Wasserglaslösung eingetropft und in alkalischem Medium etwa eine halbe Stunde bei einer Temperatur von 72°C und anschließend eine halbe Stunde bei einer Temperatur von 76°C getempert. Der pH-Wert soll dabei zwischen 8 und 10 liegen. Anschließend wird im leichten Vakuum bis zu einem Feststoffgehalt von 10 % eingedampft.

### Beispiel 3:

Man verfährt wie in Beispiel 2, jedoch werden beim Eindosieren der Frischsollösung in das alkalische Medium gleichzeitig 1 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10 % eingedampft.

### Beispiel 4:

In analoger Weise kann auch Si(OR)₃-(CH₂)₃-SH mit R = C₂H₅ eingesetzt werden. Es entsteht ein identisches Produkt.

### Beispiel 5:

Man verfährt wie in Beispiel 2, jedoch werden beim Eindosieren der Frischsollösung in das alkalische Medium gleichzeitig 2,5 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10 % eingedampft.

### Beispiel 6:

In analoger Weise kann auch Si(OR)₃-(CH₂)₃-SH mit R = C₂H₅ eingesetzt werden. Es entsteht ein identisches Produkt.

### Beispiel 7:

Man verfährt wie in Beispiel 2, jedoch werden beim Eindosieren der Frischsollösung in das alkalische Medium gleichzeitig 5 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10% eingedampft.

### Beispiel 8:

In analoger Weise kann auch Si(OR)₃-(CH₂)₃-SH mit R = C₂H₅ eingesetzt werden. Es entsteht ein identisches Produkt.

### Beispiel 9:

10 g einer ethanolischen Lösung enthaltend 50 Gew.-% eines Silans der Formel Si(OC₂H₅)₃-(CH₂)₃-SH werden unter heftigem Rühren bei Raumtemperatur in 100 ml Wasser eingetropft. Dabei wird der pH-Wert durch Titration mit NaOH oberhalb von pH 10 gehalten. Nach einstündigem Verrühren bei Raumtemperatur wird das Ethanol abdestilliert.

Man erhält 80 g einer wässrigen Lösung von Si(OH)₃-(CH₂)₃-SH, das ggf. bereits über Wasserstoffbrücken aggregiert sein kann.

### Beispiel 10:

100 g einer Lösung gemäß Beispiel 9 werden durch Eintropfen von Wasserstoffperoxid oxidiert. Man erhält eine Lösung eines Silans der Bruttoformel Si(OH)₃-(CH₂)₃-SO₃Na, das ggf. bereits über Wasserstoffbrücken aggregiert sein kann.

### Beispiel 11:

Man verfährt wie in Beispiel 3, jedoch wird anstelle des alkoxygruppenhaltigen Silans 1 Mol-% des hydrolysierten Silans aus Beispiel 9 zudosiert. Anschließend wird die Mercaptogruppe in bekannter Weise durch Zugabe von 35 %iger H₂O₂-Lösung zu SO₃H oxidiert. Es wird bis zu einem Feststoffgehalt von 10 % eingedampft.

### Beispiel 12:

Man verfährt wie in Beispiel 3, jedoch werden anstelle des alkoxygruppenhaltigen Silans 2,5 Mol-% des hydrolysierten Silans aus Beispiel 9 zudosiert. Anschließend wird die Mercaptogruppe in bekannter Weise durch Zugabe von 35 %iger H₂O₂-Lösung zu SO₃H oxidiert. Es wird bis zu einem Feststoffgehalt von 10 % eingedampft.

### Beispiel 13:

Man verfährt wie in Beispiel 3, jedoch werden anstelle des alkoxygruppenhaltigen Silans 5 Mol-% des hydrolysierten Silans aus Beispiel 9 zudosiert. Anschließend wird die Mercaptogruppe in bekannter Weise durch Zugabe von 3 %iger H₂O₂-Lösung zu SO₃H oxidiert. Es wird bis zu einem Feststoffgehalt von 10 % eingedampft.

### Beispiel 14:

Man verfährt wie in Beispiel 3, jedoch wird anstelle des alkoxygruppenhaltigen Silans 1 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 15:

Man verfährt wie in Beispiel 3, jedoch werden anstelle des alkoxygruppenhaltigen Silans 2,5 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 16:

Man verfährt wie in Beispiel 3, jedoch werden anstelle des alkoxygruppenhaltigen Silans 5 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 17:

Man legt 872,8 g Edelwasser vor und gibt
105,4 g NaOH 50% zu. Die Temperatur wird auf 40°C erhöht. Bei dieser Temperatur werden in 15 Minuten 11,1 g 3-Mercaptopropyl-1-trimethoxysilan 97%ig zugetropft.

Man verrührt 45 Minuten bei 40°C, und destilliert anschließend in 45 Minuten
5,3 g Methanol ab. Zur Oxidation der Mercaptogruppe werden anschließend in 45 Minuten 16 g Wasserstoffperoxid 35%ig zugegeben. Es wird nochmals 1 Stunde bei 40°C nachgerührt.

Ausbeute: 1000g einer alkalischen Lösung von Trihydroxysilylpropansulfonsäure.

### Beispiel 18:

Man legt 479,7 g Edelwasser vor und gibt 135,3 g NaOH 50% zu. Die Temperatur wird auf 40°C erhöht. Bei dieser Temperatur werden in 60 Minuten
133,2 g 3-Mercaptopropyl-1-trimethoxysilan 97%ig zugetropft.

Man verrührt 60 Minuten bei 40°C, und destilliert anschließend in 90 Minuten
63,2 g Methanol ab. Zur Oxidation der Mercaptogruppe werden anschließend in 60 Minuten 191,8 g Wasserstoffperoxid 35%ig zugegeben. Die Reaktion verläuft stark exotherm, die Temperatur steigt dabei auf 60°C an. Es wird nochmals 1 Stunde bei 60°C nachgerührt. Anschließend werden 1123,2g NaOH 50% zugegeben.

Ausbeute: 2000g einer alkalischen Lösung von Trihydroxysilylpropansulfonsäure.

### Beispiel 19:

91,1 g einer alkalischen Lösung von Trihydroxisilylpropansulfonsäure aus Beispiel 17 werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 0,5% Silan bezogen auf SiO₂

### Beispiel 20:

15,2 g einer alkalischen Lösung von Trihydroxisilylpropansulfonsäure aus Beispiel 18
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 0,5% Silan bezogen auf SiO₂

### Beispiel 21:

Man legt 901,3 g Edelwasser vor und gibt
55,0 g NaOH 99% zu. Die Temperatur wird auf 40°C erhöht. Bei dieser Temperatur werden in 15 Minuten
22,2 g 3-Mercaptopropyl-1-trimethoxysilan 97%ig zugetropft.

Man verrührt ca. 60 Minuten bei 40°C bis eine klare Lösung entstanden ist und destilliert anschließend in 45 Minuten
10,5 g Methanol ab. Zur Oxidation der Mercaptogruppe werden anschließend in 45 Minuten
32g Wasserstoffperoxid 35%ig zugegeben. Es wird nochmals 1 Stunde bei 40°C nachgerührt.

Ausbeute: 1000g einer alkalischen Lösung von Trihydroxysilylpropansulfonsäure.

### Beispiel 22:

91,1 g einer alkalischen Lösung von Trihydroxisilylpropansulfonsäure aus Beispiel 21
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 1% Silan bezogen auf SiO₂

### Beispiel 23:

Man legt 811,4 g Edelwasser vor und gibt
62,0 g NaOH 99% zu. Die Temperatur wird auf 40°C erhöht. Bei dieser Temperatur werden in 15 Minuten
55,5 g 3-Mercaptopropyl-1-trimethoxysilan 97%ig zugetropft.

Man verrührt ca. 60 Minuten bei 40°C bis eine klare Lösung entstanden ist und destilliert anschließend in 45 Minuten
26,3g Methanol ab. Zur Oxidation der Mercaptogruppe werden anschließend in 45 Minuten
79,9 g Wasserstoffperoxid 35%ig zugegeben. Es wird nochmals 1 Stunde bei 40°C nachgerührt.

Ausbeute: 1000g einer alkalischen Lösung von Trihydroxysilylpropansulfonsäure.

### Beispiel 24:

89,2 g einer alkalischen Lösung von Trihydroxisilylpropansulfonsäure aus Beispiel 23
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 2,5% Silan bezogen auf SiO₂

### Beispiel 25:

Man legt 424,9 g Edelwasser vor und gibt 68,5 g NaOH 99% zu. Die Temperatur wird auf 40°C erhöht. Bei dieser Temperatur werden in 60 Minuten
222 g 3-Mercaptopropyl-1-trimethoxysilan 97%ig zugetropft.

Man verrührt ca. 60 Minuten bei 40°C, bis eine klare Lösung entstanden ist und destilliert anschließend in 90 Minuten das entstandene Methanol ab. Zur Oxidation der Mercaptogruppe werden anschließend in 60 Minuten
319,6 g Wasserstoffperoxid 35%ig zugegeben. Die Reaktion verläuft stark exotherm, die Temperatur steigt dabei auf 60°C an. Es wird nochmals 1 Stunde bei 60°C nachgerührt. Anschließend werden
85,6g NaOH 99% zugegeben. Dabei geht ein zunächst ausgefallener Niederschlag wieder in Lösung.

Ausbeute: 1000g einer alkalischen Lösung von Trihydroxysilylpropansulfonsäure.

### Beispiel 26:

49,5 g einer alkalischen Lösung von Trihydroxisilylpropansulfonsäure aus Beispiel 25
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 5% Silan bezogen auf SiO₂

### Beispiel 27:

99 g einer alkalischen Lösung von Trihydroxisilylpropansulfonsäure aus Beispiel 26
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 10% Silan bezogen auf SiO₂

### Beispiel 28:

Es wurde eine Apparatur eingesetzt, die aus drei hintereinander angeordneten und miteinander verbundenen Überlaufreaktoren aus Glas besteht. Der Inhalt der Überlaufreaktoren, gemessen bei Siedetemperatur, beträgt für Reaktionsgefäß 1: 783 ml für Reaktionsgefäß 2: 617 ml, für Reaktionsgefäß 3: 644 ml.

Der Inhalt jedes Reaktionsgefäßes wird mit einem Propellerrührer durchmischt. Die Beheizung des Reaktorinhaltes erfolgt indirekt mit Dampf. Zu diesem Zweck sind im Innern der Reaktionsgefäße dampfdurchströmte Heizschlangen angebracht. Die Brüden werden über einen Wasserkühler geführt, kondensiert und anschließend das Volumen des Kondensats gemessen..

In den ersten der drei Überlaufreaktoren wurde mit einer Zugabevorrichtung eine gemäß US-A-2 244 325 hergestellte wässrige Lösung von saurem Frischsol gegeben. Die Zugabevorrichtung war so gewählt, dass die Zugabe auch in einzelne, ausgewählte Reaktoren erfolgen konnte. Über eine Dosiervorrichtung war ebenso die Zugabe der Silanlösung und gegebenenfalls einer Lösung einer weiteren Base möglich.

Um die Lagerstabilität, d.h. die Zeitdauer der Lagerfähigkeit des Frischsols zu erhöhen, wurde besagte Lösung auf Temperaturen von 4-10°C gekühlt.

Die Silanlösung wurde nicht gekühlt, sie wurde mit der Umgebungstemperatur eingesetzt.

In den drei Reaktionsgefäßen wurde ein stationärer Zustand mit einer mittleren Verweilzeit von 14 min im 1. Reaktionsgefäß, 16 min im 2. Reaktionsgefäß und 20 min im 3. Reaktionsgefäß eingestellt. Dazu wurden 3200 ml Frischsol, das analog zu Beispiel 1 hergestellt wurde, mit 5,6 Gew.-% SiO₂ pro Stunde in das erste Reaktionsgefäß und 260 ml einer 2,25 Gew.- %igen ethanolischen Lösung von Trimethoxysilylpropylmercaptan pro Stunde ebenfalls in das 1. Reaktionsgefäß zugegeben und 1160 ml Wasser/Methanol verdampft.

Während des stationären Zustands wurden im 1. Reaktionsgefäß 91°C, im 2. Reaktionsgefäß 100°C und im 3. Reaktionsgefäß ebenfalls 100°C eingestellt. Die SiO₂-Konzentration verändert sich von 5,6 Gew.-% im 1. Reaktionsgefäß auf 9,5 Gew.-% im 3. Reaktionsgefäß während des stationären Zustands.

Nach dem Abkühlen des Produkts wird ein Überschuss von 20 % einer 3 %ige Lösung von H₂O₂ zugegeben.

Man erhielt ein feinteiliges, teilstrukturiertes Kieselsol, das eine Dichte von 1,065 g/ml, einen pH-Wert von 9,7 ,eine BET-Oberfläche von 480 m²/g und einen SO₃H-Gehalt von 1 Mol-% aufwies.

### Beispiel 29:

In der in Beispiel 28 beschriebenen Apparatur wurde ein stationärer Zustand mit einer mittleren Verweilzeit von 14 min im 1. Reaktionsgefäß, 16 min im 2. Reaktionsgefäß und 20 min im 3. Reaktionsgefäß durch die Zugabe von 1600 ml Frischsol mit 5,6 Gew.-% SiO₂ pro Stunde in das erste Reaktionsgefäß und 128 ml einer 2,25 Gew.-%igen ethanolischen Lösung von Trimethoxysilylpropylmercaptan pro Stunde ebenfalls in das 1. Reaktionsgefäß und durch Verdampfen von 390 ml Wasser/Ethanol im 3. Reaktionsgefäß eingestellt.

Während des stationären Zustands wurden im 1. Reaktionsgefäß 87°C, im 2. Reaktionsgefäß 100°C und im 3. Reaktionsgefäß ebenfalls 100°C eingestellt. Die SiO₂-Konzentration veränderte sich von 5,6 Gew.-% im 1. Reaktionsgefäß auf 6,1 Gew.-% im 2. Reaktionsgefäß.

Nach 3 Stunden Laufzeit im stationären Zustand wurde im Ablauf ein Kieselsol mit 6,1.-% SiO₂, mit einem pH-Wert von 8,71 und einer BET-Oberfläche vom 698 m²/g erhalten.

Nach dem Abkühlen des Produkts wird ein Überschuss von 20% einer 3% ige Lösung von H₂O₂ zugegeben.

### Beispiel 30:

Die Wirksamkeit der Verbindungen aus den Beispielen 2, 3, 5, 7, 11, 12, 13, 14, 15, 16, 19, 20, 22, 24, 26 und 27 wurde in bekannter Weise durch eine Bestimmung der Entwässerungsgeschwindigkeiten in einem Mütek DFS 03 Gerät, Sieb 60 / 0,17 bestimmt.

Als Standard diente das nicht modifiziertes Kieselsol aus Beispiel 2. Seine Wirksamkeit wurde auf 100 % gesetzt.

### Durchführung der Entwässerungsprüfung

Um eine optimale Differenzierung sowie Vergleichbarkeit zwischen den einzelnen Prüfreihen zu erreichen, wird ein automatisiertes Dosier- und Rührprofil eingehalten. Zur Prüfung wird ein Gerät der Firma Mütek (DFS 03) (**D**ynamic **F**iltration **S**ystem) eingesetzt. Mit diesem Gerät ist es u.a. möglich, Rührerprofile in Abhängigkeit von der Zeit vorzugeben und den vorgelegten Stoff mit bis zu 1500 U/min zu scheren.

Als Modellsystem für die Prüfungen wurde eine Mischung aus Lang- und Kurzfaser mit einem Füllstoffzusatz von 20 % eingesetzt (58,35 % gebleichter Kurzfaser und 25 % gebleichter Langfaser-Zellstoff, 16,65 % gefälltes Calciumcarbonat GCC). Die bevorzugte Stoffdichte beträgt 0,5%. Als Referenzsystem wurde ein Polyacrylamid mit einer Kationizität von 20% und einer Brookfield-Viskosität von 3,91, gemessen in 0,1%iger 1 molarer NaCl bei 60 Upm, mit den Mikropartikeln kombiniert. Zur Messung der Entwässerung (und der Retention) mit dem DFS - 03 wird das Polyacrylamid in einer Konzentration von 0,075 Gew.% und das Mikropartikel in einer Konzentration von 0,08 Gew.% jeweils bezogen auf den Stoff eingesetzt.

Zur Messung der Entwässerung mit dem DFS - 03 wird der Stoff unter Rühren (500 Upm) vorgelegt und eine Lösung des Polyacrylamids, die wie unten beschrieben hergestellt wurde, nach 10 s zudosiert. Nach 20 s wird für weitere 20 s bei 1200 Upm geschert und anschließend das Mikropartikel zugegeben. Nach einer Mischphase (200 Upm, 10 s) und einer weiteren Scherphase (500 Upm, 10 s) wird das Ventil unter dem Sieb (Maschenweite: 0,25 mm) geöffnet und die Entwässerungszeit gemessen. Die Entwässerungszeit der Nullprobe betrug ca. 60 s.

### Einwaagen:

In 99,6 g Wasser (Leitungswasser) werden 0,4 g des Polyacrylamids unter Rühren eingestreut, 15 Minuten gerührt (Magnetrührer 300 U/min), danach eine 1/2 Std. zur Quellung stehen lassen (Rührer abstellen).

Anschließend wird auf 400 g aufgefüllt (0,1 %ige Lsg.) und bei 500 U/min ca. 2,5 Std. gerührt bis alles vollständig gelöst ist.

Es ergaben sich die folgenden Wirksamkeitssteigerungen:

**Tabelle**

| Kieselsol aus Bsp. | Schwefelgehalt in Mol-% bezogen auf SiO₂ des Kieselsols | Steigerung der Entwässerungsgeschwindigkeit in % | Teilchen größen [nm] | S-Wert ** | Oberfläche * [m²/g] |
|---|---|---|---|---|---|
| 2 | 0 | 100 | 3-35 | 64 | 545 |
| 3 | 1 | 103 | 5-40 | 67 | 574 |
| 5 | 2,5 | 115 | 3-40 | 60 | 515 |
| 7 | 5 | 140 | 5-40 | 48 | 469 |
| 11 | 1 | 103 | 5-40 | 62 | 520 |
| 12 | 2,5 | 110 | 3-40 | 59 | 580 |
| 13 | 5 | 152 | 5-40 | 50 | 414 |
| 14 | 1 | 104 | 3-40 | 65 | 530 |
| 15 | 2,5 | 114 | 3-40 | 63 | 545 |
| 16 | 5 | 158 | 5-40 | 47 | 570 |
| 19 | 0,5 | 120 | 2-7 | 24,2 | 835 |
| 20 | 0,5 | 125 | 2-7 | 25,0 | 854 |
| 22 | 1 | 124 | 2-7 | 32 | 854 |
| 24 | 2,5 | 120 | 2-7 | 35,3 | 622 |
| 26 | 5 | 130 | 2-7 | 32,5 | 874 |
| 27 | 10 | 140 | 2-7 | 41 | 867 |

| | | | | | |
|---|---|---|---|---|---|
| * Dazu wird eine definierte Menge des Kieselsols (5 g Feststoff bezogen auf SiO₂) mit 350 ml NaCl-Lösung (0,286 kg/l) und 2 ml 1M HCl versetzt und mit deionisiertem Wasser auf 500 ml aufgefüllt. Das verdünnte Kieselsol hat einen pH-Wert von ca. 2 und eine NaCl-Konzentration von 4,9M/l. 150 ml des verdünnten Kieselsols werden bei definierter Temperatur mit einer 0,1M NaOH-Lösung titriert. Der Verbrauch *V* (ml) zwischen pH=4 und einem End-pH (*EP*) von ca. 9 wird ermittelt. Die spezifische Oberfläche *Oₛₚ* in m²/g erfolgt nach der Formel: *Oₛₚ*=*23***V-25.* Der End-pH der Titration *EP* wird mit einem Eichsol bestimmt, bei dem die spezifische Oberfläche und damit der theoretische NaOH-Verbrauch *Vₜ* bekannt sind. Bei der Probenpräparation für die BET-Messung wird das Eichsol mit deionisiertem Wasser auf ca. 5 % verdünnt und mit einem Ionenaustauscher auf einen pH< 5 gestellt. Danach wird der Ionenaustauscher abfiltriert und das Filtrat mit Natronlauge auf exakt pH = 5 eingestellt. Die Probe wird in drei Gefrierzyklen bei <-10°C jeweils vollständig eingefroren und aufgetaut, um anschließend bei 110°C getrocknet zu werden. ** Die relative Viskosität wird mittels Ostwald-Viskosimeter bestimmt und daraus die relative Volumenfraktion der dispergierten Phase errechnet. Entsprechend Iler et al. erhält man daraus unter Kenntnis der Feststoff konzentration den S-Wert. Der S-Wert gibt den Anteil Silica in der dispergierten Phase in Gewichtsprozent an. Probenherstellung: Kurz vor der Messung der Viskosität werden die alkalischen Proben auf pH 2 gestellt. Hierzu werden die Proben über einen frischen Ionenaustauscher gegeben, um gleichzeitig Natriumionen durch Protonen auszutauschen. Anschließend wird filtriert und mit 1 N HCl auf pH 2 gestellt. Die Silica-Konzentration wird gravimetrisch ermittelt. | | | | | |

## Patentansprüche

1. Verwendung von Sulfonsäuregruppen- und/oder Mercaptogruppen-haltigen Kieselsolen als Mikropartikel bei der Papierherstellung, insbesondere bei der Papierretention.

2. Verwendung gemäß Anspruch 1, **dadurch gekennzeichnet, dass** als Kieselsole solche eingesetzt werden, die eine an ein Siliciumatom gebundene Gruppe der Formel I und/oder II aufweisen,
-B-(SO₃M)ₚ (I),
-B-(SH)ₚ (II),
worin
B ein (p+1)-valentes Brückenglied bedeutet,
p eine Zahl von 1 bis 3 ist und
M für Wasserstoff, Alkali, insbesondere Na, Li, K, Erdalkali-, insbesondere Mg, Ca oder Ammonium steht.

3. Verwendung gemäß Anspruch 2, **dadurch gekennzeichnet, dass**
B bivalent ist, p für 1 steht, B insbesondere für eine gegebenenfalls durch ein oder mehrere Sauerstoffatome unterbrochene lineare oder verzweigte Alkylengruppe mit 1 bis 15 C-Atomen, eine Cycloalkylengruppe mit 5 bis 8 C-Atomen oder eine Einheit der Formeln 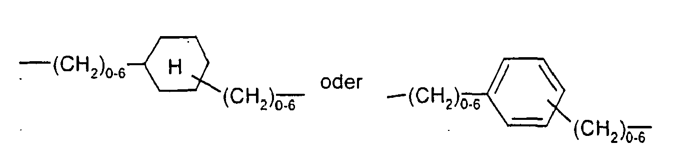 steht.

4. Verwendung gemäß Anspruch 2, **dadurch gekennzeichnet, dass** B für -(CH₂)ₙ mit n = 1 bis 6, insbesondere 3 steht.

5. Verwendung gemäß Anspruch 1, **dadurch gekennzeichnet, dass** das Kieselsol einen Rest der Formel Ia besitzt,
-(CH₂)₃-SO₃M (Ia)
wobei
M für Wasserstoff, Alkali, Erdalkali oder Ammonium steht.

6. Verwendung gemäß Anspruch 1, **dadurch gekennzeichnet, dass** die Kieselsole einen nach der TEM-Methode bestimmte mittlere Teilchengröße von kleiner 400 nm besitzen.

7. Verwendung gemäß Anspruch 1, **dadurch gekennzeichnet dass** man das Kieselsol in Kombination mit kationischen Polymeren als Mikropartikelsystem in der Papierherstellung einsetzt.

8. Verwendung gemäß Anspruch 7, **dadurch gekennzeichnet, dass** als kationisches Polymer, Polyethylenimine, Polyamidamine, Polyacrylamide, Polyvinylamine, Stärke oder Guarkernmehl verwendet wird.

9. Verfahren zur Herstellung von Papier, wobei einer wässrigen Zellulosesuspension ein Kieselsol und ein kationisches Polymer in beliebiger Reihenfolge zugegeben wird, und anschließend die Blattbildung, Entwässerung und Trocknung des Blattes vorgenommen wird,
**dadurch gekennzeichnet,**
**dass** ein Sulfonsäure- und/oder Mercaptogruppen-haltiges Kieselsol zugegeben wird.

## Claims

1. Use of silica sols containing sulfonic acid groups and/or mercapto groups as microparticles in paper production, in particular for paper retention.

2. The use according to claim 1, **characterized in that** silica sols used are those which have, bonded to a silicon atom, a group of the formula I and/or II,
-B-(SO₃M)ₚ (I)
-B-(SH)ₚ (II),
wherein
B is a (p+1)-valent bridge member,
p is a number from 1 to 3 and
M is hydrogen, an alkali metal, in particular Na, Li, K, an alkaline earth metal, in particular Mg, Ca, or ammonium.

3. The use according to claim 2, **characterized in that**
B is bivalent, p is 1, B is in particular a linear or branched alkylene group, optionally interrupted by one or more oxygen atoms, and having 1 to 15 C atoms, a cycloalkylene group having 5 to 8 C atoms or a unit of the formulae

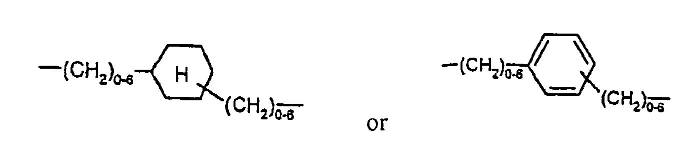

4. The use according to claim 2, **characterized in that** B is -(CH₂)ₙ where n is from 1 to 6, in particular 3.

5. The use according to claim 1, **characterized in that** the silica sol has a residue of the formula Ia,
-(CH₂)₃-SO₃M (Ia)
wherein
M is hydrogen, an alkali metal, an alkaline earth metal, or ammonium.

6. The use according to claim 1, **characterized in that** the silica sols have a mean particle size of less than 400 nm, determined by the TEM method.

7. The use according to claim 1, **characterized in that** the silica sol is used in combination with cationic polymers as a microparticle system in the paper production.

8. The use according to claim 7, **characterized in that** polyethylenimines, polyamidoamines, polyacrylamides, polyvinylamines, starch or guar flour is used as the cationic polymer.

9. A process for the production of paper, wherein a silica sol and a cationic polymer are added to an aqueous cellulose suspension in any desired sequence, and sheet formation, drainage and drying of the sheet are then carried out, **characterized in that** a silica sol containing sulfonic acid groups and/or mercapto groups is added.

## Revendications

1. Utilisation de sols de silice contenant des groupes acide sulfonique et/ou mercapto en tant que microparticules lors de la fabrication du papier, en particulier lors de la rétention du papier.

2. Utilisation selon la revendication 1, **caractérisée en ce qu'**on utilise en tant que sols de silice ceux qui comportent un groupe de formule I et/ou II lié à un atome de silicium
-B-(SO₃M)ₚ (I),
-B-(SH)ₚ (II)
dans lesquelles :
B est un chaînon pontant (p+1)-valent
p est un nombre de 1 à 3, et
M représente l'atome d'hydrogène, un métal alcalin, en particulier Na, Li, K, un métal alcalino-terreux, en particulier Mg, Ca, ou l'ammonium.

3. Utilisation selon la revendication 2, **caractérisée en ce que** B est bivalent, p vaut 1, B représente en particulier un groupe alkylène à 1 à 15 atomes de carbone à chaîne droite ou ramifiée, éventuellement interrompu par un ou plusieurs atomes d'oxygène, un groupe cycloalkylène ayant 5 à 8 atomes de carbone ou un motif de formules 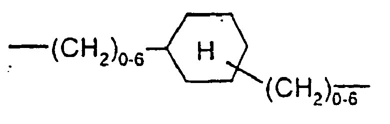 ou

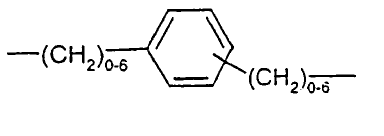

4. Utilisation selon la revendication 2, **caractérisée en ce que** B représente -(CH₂)ₙ, avec n = 1 à 6, en particulier 3.

5. Utilisation selon la revendication 1, **caractérisée en ce que** le sol de silice comprend un radical de formule Ia
-CH₂)₃-SO₃M (Ia)
dans laquelle M est l'atome d'hydrogène, un métal alcalin ou alcalino-terreux, ou l'ammonium.

6. Utilisation selon la revendication 1, **caractérisée en ce que** les sols de silice présentent une granulométrie moyenne, déterminée par la méthode MET, inférieure à 400 nm.

7. Utilisation selon la revendication 1, **caractérisée en ce qu'**on utilise le sol de silice en combinaison avec des polymères cationiques en tant que système de microparticules lors de la fabrication du papier.

8. Utilisation selon la revendication 7, **caractérisée en ce qu'**on utilise en tant que polymère cationique des polyéthylène-imines, des polyamidamines, des polyacrylamides, des polyvinylamines, de l'amidon ou de la gomme de guar.

9. Procédé pour la fabrication du papier, dans lequel on ajoute dans un ordre quelconque une suspension aqueuse de cellulose, un sol de silice et un polymère cationique, puis on procède à la formation de la feuille, à la déshydratation et au séchage de la feuille, **caractérisé en ce qu'**on ajoute un sol de silice contenant des groupes acide sulfonique et/ou mercapto.
